# EUROPÄISCHE PATENTSCHRIFT

(11) **EP 2 226 917 B1**
(45) Veröffentlichungstag und Bekanntmachung des Hinweises auf die Patenterteilung: **12.07.2017**
(21) Anmeldenummer: 09003356.4
(22) Anmeldetag: 07.03.2009
(51) Int. Cl.: H02K 3/52

(54) **Stator für einen Elektromotor, Verfahren zur Herstellung des Stators sowie Elektromotor mit einem solchen Stator**
Stator for an electrical motor, method for manufacturing the same and electrical motor with such a stator
Stator pour un moteur électrique, procédé de fabrication d'un tel stator et moteur électrique doté d'un tel stator

(43) Veröffentlichungstag der Anmeldung: 08.09.2010
(73) Patentinhaber: ZIEHL-ABEGG SE, 74653 Künzelsau (DE)
(72) Erfinder: Schmezer, Joachim, 74676 Niedernhall (DE); Janky, Peter Paul, 74653 Künzelsau (DE); Rehrauer, Jürgen, 74214 Schöntal-Sindeldorf (DE); Rusam, Frieder, 74673 Buchenbach (DE); Burkhardt, Silke, 71543 Wüstenrot (DE)
(74) Vertreter: Jackisch-Kohl, Anna-Katharina

(56) Entgegenhaltungen:
- EP-A- 1 276 207
- DE-A1- 10 152 006
- DE-A1- 19 818 432
- DE-U1- 29 817 869
- US-A- 5 996 209

## Beschreibung

Die Erfindung betrifft einen Stator für einen Elektromotor nach dem Oberbegriff des Anspruches 1, ein Verfahren zu dessen Herstellung nach dem Oberbegriff des Anspruches 15 sowie einen Elektromotor mit einem solchen Stator nach Anspruch 19.

Es ist bekannt (EP 1 490 949 B1), zum Bewickeln des Stators Wicklungskontaktelemente zu verwenden, die den Statorzähnen bzw. Statornuten als statorseitig ortsfeste Winkelstützpunkte zugeordnet sind. Die Wicklungskontaktelemente sind gesondert herstellbare Teile, die zudem in einem gesonderten Verfahrensschritt montiert werden müssen, bevor der Wicklungsvorgang stattfinden kann. Darum gestaltet sich der Wickelvorgang aufwändig und umständlich.

Beim gattungsgemäßen Stator (DE 198 18 432 A1) sind auf beide Enden des Statorkörpers Isolierendplatten aufgesetzt. Der Statorkörper hat einen inneren Ring, von dem radial Arme abstehen, die mit Wickeldrähten umwickelt werden. Die Isolierendplatten sind durch Spritzgießen aus Kunststoff hergestellte Formteile, die an die Zahn- bzw. Armform des Statorkörpers angepasst sind und von beiden Seiten aus auf die Arme des Statorkörpers aufgesetzt werden. Die Isolierendplatten haben am inneren Rand des Statorkörpers einen axial vorstehenden Ring und sind mit in Richtung auf den inneren Ring des Statorkörpers und die Arme offenen Durchlässen für den Wickeldraht versehen. Für die einzelnen Phasen werden unterschiedliche Wickeldrähte eingesetzt. Sie werden zwischen benachbarten Durchlässen der Isolierung nach außen bzw. nach innen geführt. Der Statorkörper ist außerdem mit Schneid-Klemm-Kontakten versehen. Da für die einzelnen Phasen unterschiedliche Wickeldrähte verwendet werden, ist das Wickelverfahren aufwändig und umständlich.

Bei einem anderen bekannten Stator (DE-A1-101 52 006) hat der Statorkörper radial abstehende Arme, auf welche vorgefertigte Einzelspulen gesteckt werden. Sie haben jeweils zwei Wickelkörper sowie eine Wicklung. Der eine Wickelkörper hat einen radial innen liegenden Ansatz, in dem sich drei radial hintereinanderliegende Aufnahmen für Schneid-Klemm-Kontakte befinden. Die Aufnahmen sind durch schmale Wände voneinander getrennt, die jeweils mit axial sich erstreckenden Vertiefungen versehen sind, durch welche sich die Spulenenden erstrecken. Da die Einzelspulen gesondert gefertigt und anschließend auf die Arme des Statorkörpers aufgeschoben und gesichert werden müssen, ist die Montage des Stators aufwändig.

Ein anderer bekannter Stator (US 5 996 209 A) hat für die beiden Enden des Wickeldrahtes, mit denen die radial nach innen abstehenden Arme des Statorkörpers umwickelt werden, zwei radial verlaufende Durchlässe, die jeweils eine Aufnahme für einen Schneid-Klemm-Kontakt kreuzen.

Es ist ein weiterer Stator bekannt (DE 298 17 869 U1), bei dem drei axial vorstehende Kontaktkammern vorgesehen sind, die jeweils einen Schlitz aufweisen, durch den jeweils ein Wickeldraht ragt. Jede Kontaktkammer nimmt einen Schneid-Klemm-Kontakt zur Kontaktierung der Wickeldrähte auf.

Der Erfindung liegt die Aufgabe zugrunde, den gattungsgemäßen Stator, das gattungsgemäße Verfahren und den Elektromotor so auszubilden, dass der Stator in einfacher Weise kostengünstig gefertigt werden kann.

Diese Aufgabe wird beim gattungsgemäßen Stator erfindungsgemäß mit den kennzeichnenden Merkmalen des Anspruches 1, beim gattungsgemäßen Verfahren erfindungsgemäß mit den kennzeichnenden Merkmalen des Anspruches 15 und beim Elektromotor erfindungsgemäß mit den Merkmalen des Anspruches 19 gelöst.

Der erfindungsgemäße Stator kann in einem Zug mit dem Wickeldraht bewickelt werden. Die elektrische Isolierung bildet hierbei die Wickelhilfe, so dass gesondert herzustellende und zu montierende Bauteile für die Bewicklung des Stators nicht erforderlich sind. Der Wickeldraht lässt sich durch die Durchlässe der Isolierung problemlos führen, so dass der Wickelvorgang innerhalb kürzester Zeit und einfach vorgenommen werden kann, beispielsweise mit einem Nadelwickelautomat. Ein Anwickeln des Wickeldrahtes an Kontakte ist nicht erforderlich. Die ersten Durchlässe sind an dem axial über den radial inneren Rand des Statorkörpers vorstehenden Teil der Isolierung vorgesehen. Diesen ersten Durchlässen sind die zweiten Durchlässe zugeordnet, durch welche der Wickeldraht ebenfalls geführt wird. Die zweiten Durchlässe kreuzen die Aufnahme für den Schneid-Klemm-Kontakt oder schließen an diese an und liegen mit radialem Abstand zu den ersten Durchlässen. Der Wickeldraht verläuft quer durch die Aufnahme, so dass er beim Einsetzen des Schneid-Klemm-Kontaktes nach dem Wickelvorgang zuverlässig erfasst wird.

Vorteilhaft ist es, wenn die Durchlässe der Isolierung zumindest annähernd radial ausgerichtet sind. Dadurch kann der Wickeldraht einfach über die Arme des Statorkörpers gewickelt sowie zu den einzelnen Armen geführt werden.

Damit nach dem Wickelvorgang die Kontaktierung des Wickeldrahtes mit entsprechenden Kontakten einfach und zuverlässig erfolgen kann, ist die Isolierung vorteilhaft mit Klemmabschnitten für den Wickeldraht versehen.

Die Klemmabschnitte sind bei einer bevorzugten Ausführungsform an den zweiten Durchlässen vorgesehen.

Vorteilhaft sind die zweiten Durchlässe an wenigstens einer, vorzugsweise an zwei einander gegenüberliegenden Seitenwänden mit wenigstens einem Vorsprung versehen, durch welchen die Breite des zweiten Durchlasses zumindest örtlich verringert wird. Der Wickeldraht wird dann vorteilhaft im Bereich dieses Vorsprunges geklemmt, so dass dieser Teil des Wickeldrahtes beim Wickelvorgang fixiert ist.

Bei einer anderen Lösung ist die Isolierung des Stators mit wenigstens einem Indexierelement für eine Schaltplatine versehen. Dieses Indexierelement ist somit Bestandteil der elektrischen Isolierung und kann darum sehr einfach zusammen mit der Herstellung der Isolierung erzeugt werden.

Vorteilhaft ist das Indexierelement ein Indexierstift, auf den sich die Schaltplatine problemlos aufsetzen lässt. Vorteilhaft ist die Isolierung mit mehreren Indexierelementen versehen, die so angeordnet sind, dass die Schaltplatine je nach Schaltungsvariante in unterschiedlichen Lagen auf der Isolierung bzw. ihren Indexierelementen fixiert werden kann.

Eine vorteilhafte Befestigung der Schaltplatine wird erreicht, wenn das Indexierelement nach der Montage der Schaltplatine verstemmt wird. Da das Indexierelement Teil der Isolierung ist, lässt sich das Indexierelement einfach plastisch verformen.

Bei einer anderen Lösung ist die Isolierung mit wenigstens einem weiteren Indexierelement versehen, um wenigstens einen Sensor, vorzugsweise einen Hall-IC, in seiner Einbaulage zu fixieren. Da auch dieses weitere Indexierelement Teil der Isolierung ist, kann es in einem Arbeitsschritt zusammen mit der Herstellung der Isolierung gefertigt werden. Die Montage des Stators wird dadurch wesentlich vereinfacht.

Je nach Ausbildung des Stators kann die Isolierung Teil einer Kunststoffumspritzung des Statorkörpers sein. Dann können in einem Arbeitsgang der Statorkörper umspritzt und an der Kunststoffumspritzung die Durchlässe und/oder Vertiefungen und/oder das Indexierelement für die Schaltplatine und/oder das weitere Indexierelement für die Lagefixierung des Sensors vorgesehen werden.

Es ist auch möglich, dass die Isolierung Teil einer isolierenden Kunststoffendscheibe des Statorkörpers ist. Dann wird eine solche Endscheibe am Statorkörper in geeigneter Weise befestigt. Diese Endscheibe weist dann ebenfalls die Durchlässe und/oder die Vertiefungen und/oder die verschiedenen Indexierelemente auf.

Bei einer weiteren Lösung sind die Arme an ihren freien Enden mit Zähnen versehen, die an wenigstens einer ihrer einander zugewandten Schmalseite mit einer Vertiefung versehen sind, die einen Teil der Isolierung aufnimmt. Eine solche Ausbildung hat den Vorteil, dass die Isolierung am Übergang von den Schmalseiten in die Längsseiten der Zähne keine Vorsprünge oder Wülste bildet, die den Wickelvorgang beeinträchtigen könnten.

Die Vertiefung mündet vorteilhaft in eine der Längsseiten des jeweiligen Zahns. Dadurch ist in einfacher Weise gewährleistet, dass die Kunststoffumspritzung ohne Bildung von Wülsten oder Vorsprüngen von den Schmalseiten der Zähne in deren Längsseite übergeht.

Vorteilhaft mündet die Vertiefung in die dem Ring des Statorkörpers zugewandte Längsseite des Zahns. Dadurch ist an dieser für den Wickelvorgang kritischen Übergangsstelle zwischen der Schmalseite und dieser Längsseite die Bildung von den Wickelvorgang behindernden Wülsten oder Vorsprüngen vermieden. Außerdem ergeben sich durch die Vertiefungen in den Zähnen kleinere Nutrastmomente.

Der Abstand zwischen den Schmalseiten benachbarter Zähne ist vorteilhaft über deren radiale Breite zumindest annähernd konstant.

Bei einer vorteilhaften Ausgestaltung wird über die Schaltplatine die elektrische Verbindung zwischen der Statorwicklung und einer Leistungselektronik hergestellt.

Beim erfindungsgemäßen Verfahren wird der Wickeldraht in einem Zuge um die Arme des Statorkörpers gewickelt, wobei der Wickeldraht nach dem Bewickeln der Arme durch die Durchlässe radial nach innen und von dort zum nächsten Durchlass geführt wird, durch welchen der Wickeldraht wieder radial nach außen geführt wird. Auf diese Weise erfolgt die Bewicklung der Statorkörperarme in einem Zug. Durch diese Verfahrensweise werden Kreuzungen des Wickeldrahtes zuverlässig vermieden. Radial innen bilden sich Schlaufen des Wickeldrahtes. Der Wickeldraht wird vom Innenraum des Statorkörpers aus durch einen der ersten Durchlässe und anschließend durch den zweiten Durchlass radial nach außen geführt. Anschließend wird mindestens ein Arm mit dem Wickeldraht umwickelt. Er wird anschließend durch den in Umfangsrichtung nächsten zweiten Durchlass und den nächsten ersten Durchlass radial nach innen geführt. Der Wickeldraht wird schließlich zum folgenden ersten Durchlass und dem zugeordneten zweiten Durchlass wieder radial nach außen geführt. Diese Verfahrensschritte werden so lange wiederholt, bis der letzte Arm des Statorkörpers umwickelt und der Wickeldraht durch die Durchlässe radial nach innen geführt ist.

Nach dem Umwickeln des einen Armes wird der Wickeldraht vorteilhaft zum nächsten Arm geführt, der unmittelbar anschließend umwickelt wird. Erst wenn dieser nächste Arm umwickelt ist, wird der Wickeldraht durch die Durchlässe radial nach innen geführt, um dann in einem nächsten Schritt die benachbarten beiden Arme zu umwickeln.

Es ist aber auch möglich, dass nach dem Umwickeln des einen Arms der Wickeldraht durch die Durchlässe radial nach innen geführt, anschließend durch den benachbarten Durchlass radial nach außen geführt und der nächste Arm umwickelt wird. Bei einer solchen Verfahrensweise werden die Arme einzeln umwickelt und nach jedem Umwickelvorgang der Wickeldraht wieder radial nach innen zurückgeführt.

Bei einer vorteilhaften Ausführungsform wird nach dem Wickelvorgang die Kontaktierung der Wicklungen mittels Schneid-Klemm-Kontakten vorgenommen.

Je nach Schaltungsvariante werden vorteilhaft nach der Kontaktierung die zwischen den Durchlässen radial innen gebildeten Schlaufen durchtrennt und vorteilhaft entfernt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Draufsicht auf einen erfindungsgemäßen umspritzten Stator eines Elektromotors,
- Fig. 2: einen Teil des erfindungsgemäßen Stators gemäß Fig. 1,
- Fig. 3: den Ausschnitt X in Fig. 2 in vergrößerter Darstellung,
- Fig. 4: in einem Schnitt einen Teil des erfindungsgemäßen Stators gemäß Fig. 1 mit einer Schaltplatine, die am Stator befestigt ist,
- Fig. 5: im Schnitt und in vergrößerter Darstellung die Befestigung eines Sensorhalters an der Schaltplatine gemäß Fig. 4.

Der im Folgenden beschriebene Stator ist Teil eines Elektromotors, insbesondere eines elektronisch kommutierten Elektromotors. Der Stator hat einen Statorkörper 1, beispielsweise ein Statorblechpaket, das aus aufeinandergesetzten Statorblechen 2 besteht, die innerhalb des Statorblechpaketes 1 in bekannter Weise miteinander verbunden sind, beispielsweise durch warzenartige Erhöhungen der Statorbleche 2, die in entsprechende Vertiefungen oder Ausnehmungen des jeweils benachbarten Statorbleches eingreifen. Die Statorbleche können zusätzlich miteinander verklebt und/oder über Schrauben, Nieten und dergleichen fest miteinander verbunden sein. Der Statorkörper 1 hat einen inneren Ring 3, von dem über den Umfang verteilt radial Arme 4 abstehen, die an ihren freien Enden jeweils mit einem Zahn 5 versehen sein können. Die Zähne stehen in Umfangsrichtung des Statorkörpers 1 gleich weit über die Arme 4 vor.

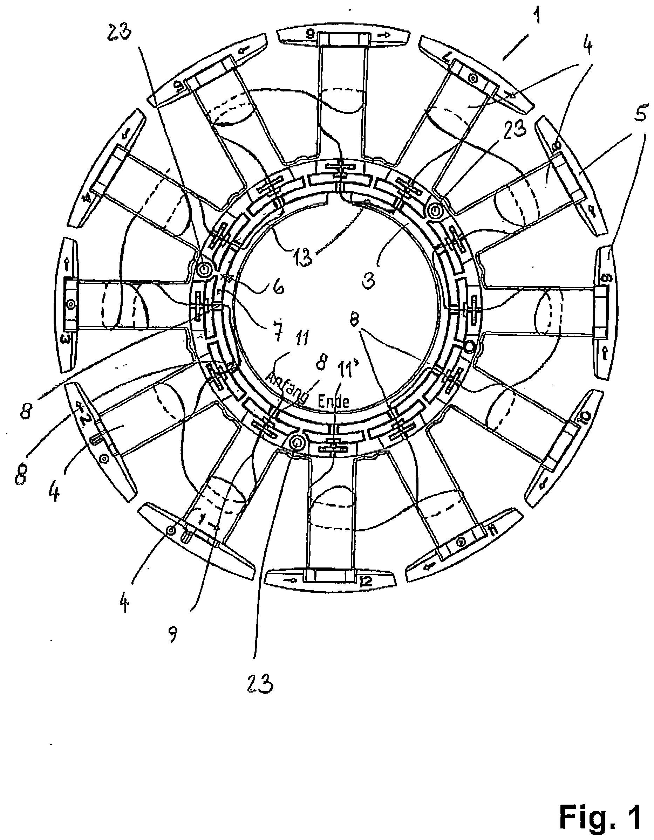

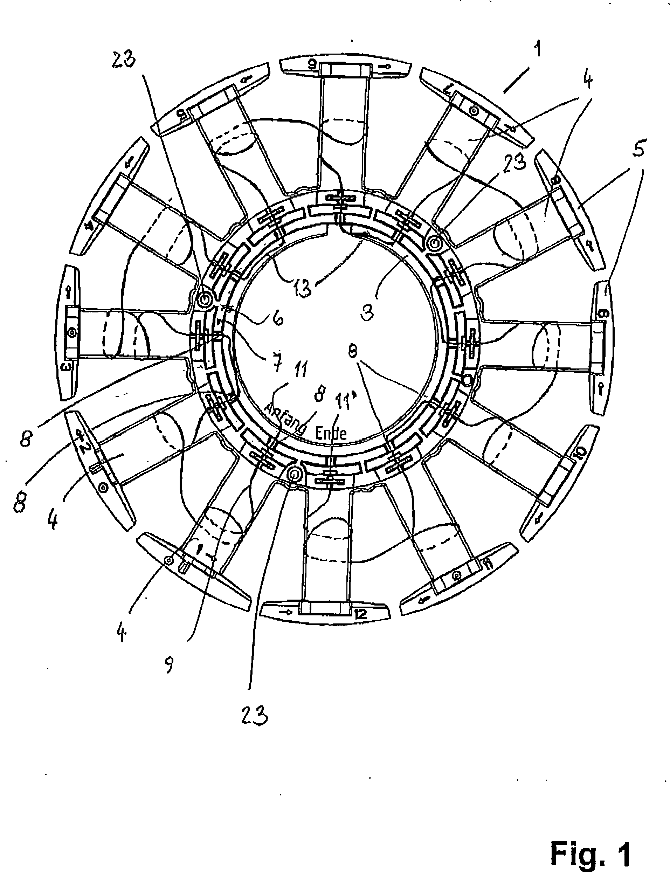

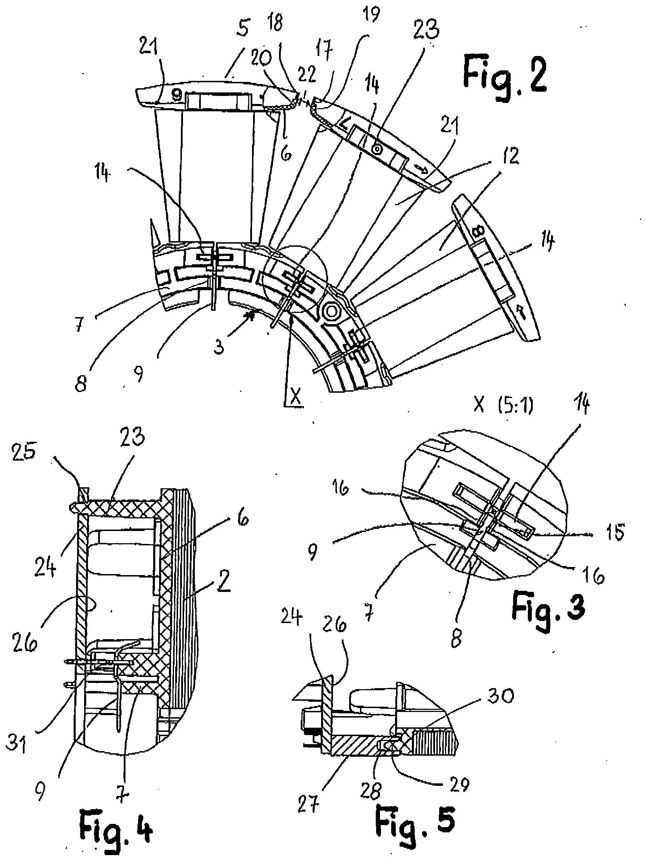

Der Statorkörper 1 ist mit einem Kunststoff 6 umspritzt, der beispielsweise ein Polyamid ist. Der Kunststoff 6 bildet an oder nahe dem inneren Rand des Statorkörpers 1 einen umlaufenden, axial über den Statorkörper 1 vorstehenden Turm 7 aus, der in gleichmäßigen Abständen über seinen Umfang mit Zwischenräumen bzw. Schlitzen 8 versehen ist. Sie dienen zur Durchführung eines Wickeldrahtes 9, mit dem die Wicklungen des Statorkörpers 1 hergestellt werden. Fig. 1 zeigt den Anfang 11 des Wickeldrahtes 9. Dieser Wickeldrahtanfang 11 liegt an der Innenseite des Statorkörpers 1 und ist durch einen Schlitz 8 des Turmes 7 radial nach außen geführt. Mit dem Wickeldraht 9 wird dann der erste Arm 4 des Statorkörpers 1 umwickelt. Anschließend wird der benachbarte Arm 4 umwickelt. Von hier aus wird der Wickeldraht 9 durch den nächsten Schlitz 8 des Turmes 7 radial nach innen und dort zum nächsten Schlitz 8 im Turm 7 geführt. Durch diesen nächsten Schlitz 8 wird der Wickeldraht 9 radial nach außen geführt, um den nächsten Arm 4 des Statorbleches zu umwickeln. Auf die beschriebene Weise wird nacheinander jeder Arm 4 mit der entsprechenden Wicklung versehen, bis der Wickeldraht 9 den letzten Arm 4 umwickelt und sein Ende 11' durch den zugeordneten Schlitz 8 radial nach innen geführt worden ist. Aufgrund der Schlitze 8 im radial inneren Turm 7 ist es möglich, der Statorkörper 1 in einem Zuge ohne zusätzliche Hilfsvorrichtungen zu bewickeln. Durch diese Art des Wickelvorganges wird insbesondere vermieden, dass einander kreuzende Wickeldrahtabschnitte entstehen. In Fig. 2 sind die Wicklungen 12 dargestellt, die sich nach dem Wickelvorgang ergeben.

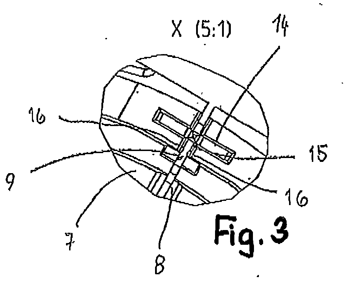

Im Bereich des Ringes 3 des Statorkörpers 1 ist die Umspritzung 6 mit Taschen 14 zur Aufnahme von Schneid-Klemm-Kontakten 31 versehen, mit denen der Wickeldraht 9 kontaktiert wird. Die Taschen 14 liegen mit radialem Abstand zu den Zwischenräumen 8, durch welche der Wickeldraht 9 verläuft. Zwischen den Zwischenräumen 8 und den Taschen 14 befindet sich in der Umspritzung 6 jeweils eine radial verlaufende Vertiefung 15, die vorteilhaft als Klemmbereich für den Wickeldraht 9 dient. Die Vertiefung 15 erstreckt sich vorteilhaft radial, so dass der Wickelvorgang einfach durchgeführt werden kann. Die Klemmung des Wickeldrahtes 9 in den Vertiefungen 15 wird vorteilhaft dadurch erreicht, dass die Vertiefung 15 zumindest über einen Teil ihrer Länge verengt ausgebildet ist, so dass der Wickeldraht durch diese Verengung in der Vertiefung geklemmt wird Im Ausführungsbeispiel sind am radial inneren Ende der Vertiefungen 15 einander gegenüberliegend Vorsprünge 16 (Fig. 3) vorgesehen, die zur beschriebenen Verengung führen. Der Wickeldraht 9 wird beim dargestellten Ausführungsbeispiel nicht nur durch die Durchlässe 8, sondern auch durch die Vertiefungen 15 geführt, die ebenfalls Durchlässe bilden.

Da der Wickeldraht 9 in den Vertiefungen 15 geklemmt ist, lassen sich die Schneid-Klemm-Kontakte 31 für die Kontaktierung problemlos in die Taschen 14 einsetzen. Nach dem Kontaktieren der Wickeldrähte 9 werden je nach Schaltungsvariante die entsprechenden Schlaufen 13 durchtrennt und entfernt.

Die Vertiefungen 15 liegen beispielhaft in einer Längsmittelebene des zugehörigen Arms 14 des Statorkörpers 1, können aber auch versetzt zu ihr liegen. Auch können die Vertiefungen 15 unter einem Winkel zur Radialen verlaufen.

Die Zähne 5 des Statorkörpers 1 erstrecken sich in Umfangsrichtung gleich weit über die zugehörigen Arme 4. An beiden Schmalseiten 17, 18 jedes Zahnes 5 befindet sich jeweils eine Vertiefung 19, 20, die sich beispielhaft etwa von der halben Breite der Schmalseiten 17, 18 aus bis zu der den Armen 4 zugewandten Längsseite 21 erstreckt (Fig. 2). Durch diese Vertiefungen 19, 20 wird ein Aufnahmeraum für den zur Umspritzung herangezogenen Kunststoff gebildet. Die Vertiefungen 19, 20 sorgen dafür, dass am Übergang von den Schmalseiten 17, 18 zur Längsseite 21 der Zähne 5 keine vorstehenden Kunststoffnasen beim Spritzvorgang gebildet werden, so dass der Wickelraum für die Herstellung der Wicklungen 12 optimal genutzt werden kann. Der Kunststoff 6 füllt die Vertiefungen 19, 20 vollständig aus. Er bildet einen kontinuierlichen Übergang von den Schmalseiten 17, 18 zur Längsseite 21. Die Vertiefungen 19, 20 führen zu kleineren Nutrastmomenten. Außerdem dienen sie in der beschriebenen Weise als Fließhilfe beim Umspritzen des Zahnes 5 mit dem Kunststoff 6. Da am Übergang von den Schmalseiten 17, 18 zu den Längsseiten 21 keine Vorsprünge durch den Kunststoff gebildet werden, lässt sich der Wickelvorgang mühelos und einfach durchführen. Insbesondere ergeben sich etwa konstante Abstände 22 zwischen benachbarten Zähnen 5.

Der Kunststoff 6 bildet im Bereich einiger der Zähne 5 des Statorkörpers 1 Indexierstifte 23 aus, mit denen eine Lagefixierung einer Schaltplatine 24 (Fig. 4) erreicht wird. Wie Fig. 1 zeigt, sind am Statorkörper 1 beispielhaft drei Indexierstifte 23 vorgesehen, die sich etwa parallel zur Achse des Statorkörpers 1 erstrecken und in unterschiedlichen Winkelabständen vorgesehen sind. Dadurch ist es in einfacher Weise möglich, die Schaltplatine 24 für unterschiedliche Schaltungsvarianten mit Hilfe der Indexierstifte 23 fest zu montieren. Die Schaltplatine 24 hat Stecköffnungen 25 (Fig. 4), in welche die entsprechenden Indexierstifte 23 ragen. Nach der Montage der Schaltplatine 24 werden die durch die Stecköffnungen 25 ragenden Indexierstifte 23 verstemmt, wodurch eine sichere Befestigung der Schaltplatine 24 am Statorkörper 1 gewährleistet ist.

An der dem Statorkörper 1 zugewandten Unterseite 26 der Schaltplatine 24 ist wenigstens ein Halter 27 für einen Sensor angeordnet. Vorteilhaft ist der Sensor ein Hall-IC.

Der Halter 27 steht quer, vorzugsweise senkrecht von der Schaltplatine 24 ab und weist an seinem freien Ende eine Zentrierausnehmung 28 auf, in die wenigstens ein Zentrierelement 29 eines den Sensor tragenden Halteelementes 30 eingreift. Mittels der Zentrierausnehmung 28 und des vorzugsweise als Indexierstift ausgebildeten Zentrierelementes 29 lässt sich der Sensor einwandfrei in seiner Lage fixieren. Das Halteelement 30 und das Zentrierelement 29 sind Teil der Kunststoffumspritzung 6, so dass diese Elemente nicht in einem zusätzlichen Schritt montiert werden müssen.

Die Kunststoffumspritzung 6 ist beim beschriebenen Statorkörper 1 so ausgebildet, dass sie mit für die Montage wesentlichen Funktionsteilen ausgestattet ist, die somit beim Spritzvorgang hergestellt werden können. Die Kunststoffumspritzung 6 weist nicht nur den Turm 7 mit den Zwischenräumen 8 für den Wickeldraht 9 auf, sondern auch die Indexierstifte 23 sowie das Zentrierelement 29. Dadurch ist eine sehr einfache, schnelle und kostengünstige Herstellung des Statorkörpers gewährleistet. Hierzu trägt in besonders vorteilhafter Weise bei, dass die Wicklungen 12 in einem Zug ohne Anwickeln des Wickeldrahtes 9 an Kontakte und dergleichen hergestellt werden können. Einander kreuzende Drahtabschnitte beim Wickeln werden infolge der beschriebenen Ausführung vermieden. In den Vertiefungen 15 wird der Wickeldraht 9 in der beschriebenen Weise geklemmt, so dass in einem nachfolgenden Schritt die Schneid-Klemm-Kontakte 31 zuverlässig montiert werden können. Mit Hilfe der Indexierstifte 23 lässt sich die Schaltplatine 24 lagerichtig in den verschiedenen Schaltungsvarianten aufsetzen. In gleicher Weise ist auch eine lagerichtige Montage der Sensoren, insbesondere der Hall-ICs, mit Hilfe des Zentrierelementes 29 möglich. Die Schaltplatine 24 wird nach dem Aufsetzen auf die Indexierstifte 23 sicher durch Verstemmen der überstehenden Enden der Indexierstifte 23 befestigt.

Beim beschriebenen Statorkörper 1 wird eine sehr hohe Nutfüllung beim Wickelvorgang erreicht. Mit einem Nadelwickelautomat lässt sich das umspritzte Statorkörper 1 in einem Zug bewickeln. Insbesondere wird eine prozesssichere Isolation des Statorblechpaketes bei Einhaltung eines kleinen Bauraumes erreicht. Für eine Reihenschaltung und beispielsweise eine Zwei-Gruppen-Parallelschaltung kann das gleiche Wickelschema eingesetzt werden.

Die beschriebene Ausbildung des Statorkörpers 1 ist auch dann möglich, wenn anstelle eines umspritzten Statorblechpaketes Kunststoffendscheiben für die Statorisolation eingesetzt werden. In diesem Falle sind die Endscheiben mit dem Turm 7 und den Zwischenräumen 8, den Taschen 14 und den Klemmvertiefungen 15 sowie den Indexierstiften 23 und 29 versehen.

Im beschriebenen Ausführungsbeispiel werden mit dem Wickeldraht 9 stets zwei benachbarte Arme 4 umwickelt, bevor er durch die Durchlässe 8, 15 radial nach innen zurückgeführt wird. Selbstverständlich kann der Wickelvorgang auch so vorgenommen werden, dass zunächst der eine Arm 4 umwickelt, der Wickeldraht 9 anschließend durch die entsprechenden Durchlässe 8, 15 radial nach innen geführt, dann durch den nächsten Durchlass 8, 15 wieder radial nach außen und der nächste Arm 4 umwickelt wird. Auf diese Weise werden die Arme 4 jeweils einzeln nacheinander in dieser Weise umwickelt.

## Patentansprüche

1. Stator für einen Elektromotor, mit einem Statorkörper (1), der radial von einem Ring abstehende, jeweils von einer Wicklung (12) umgebene Arme (4) aufweist, mit wenigstens einer elektrischen Isolierung (6), die mit in Richtung auf den Ring (3) und die Arme (4) offenen Durchlässen (8) für den Wickeldraht (9) versehen ist sowie am inneren Rand des Statorkörpers (1) einen axial über den Statorkörper (1) vorstehenden Ring (7) bildet, und mit Aufnahmen (14) für Schneid-Klemm-Kontakte (31) für den Wickeldraht (9),
**dadurch gekennzeichnet, dass** der vorstehende Ring (7) über seinen Umfang mit den ersten Durchlässen (8) für den Wickeldraht (9) versehen ist, dass die elektrische Isolierung (6) den ersten Durchlässen (8) zugeordnete zweite Durchlässe (15) aufweist, die die für die Schneid-Klemm-Kontakte (31) vorgesehenen Aufnahmen (14) kreuzen oder an diese anschließen und die mit radialem Abstand zu den ersten Durchlässen (8) liegen.

2. Stator nach Anspruch 1,
**dadurch gekennzeichnet, dass** die Durchlässe (8, 15) zumindest annähernd radial ausgerichtet sind.

3. Stator nach Anspruch 1 oder 2,
**dadurch gekennzeichnet, dass** die Isolierung (6) mit Klemmabschnitten (15, 16) für den Wickeldraht (9) versehen ist, die an den zweiten Durchlässen (15) vorgesehen sind.

4. Stator nach einem der Ansprüche 1 bis 3,
**dadurch gekennzeichnet, dass** die zweiten Durchlässe (15) durch Vertiefungen in der Isolierung (6) gebildet sind.

5. Stator nach Anspruch 3 oder 4,
**dadurch gekennzeichnet, dass** die zweiten Durchlässe (15) an wenigstens einer, vorzugsweise an zwei einander gegenüberliegenden Seitenwänden wenigstens einen Vorsprung (16) aufweisen.

6. Stator, insbesondere nach einem der Ansprüche 1 bis 5,
**dadurch gekennzeichnet, dass** die Isolierung (6) wenigstens ein Indexierelement (23) für eine Schaltplatine (24) aufweist.

7. Stator nach Anspruch 6,
**dadurch gekennzeichnet, dass** das Indexierelement (23) als Indexierstift ausgebildet ist.

8. Stator, insbesondere nach einem der Ansprüche 1 bis 7,
**dadurch gekennzeichnet, dass** die Isolierung (6) wenigstens ein weiteres Indexierelement (29) zur Lagefixierung wenigstens eines Sensors, vorzugsweise eines Hall-ICs, aufweist.

9. Stator nach einem der Ansprüche 1 bis 8,
**dadurch gekennzeichnet, dass** die Isolierung (6) Teil einer Umspritzung des Statorkörpers (1) ist.

10. Stator nach einem der Ansprüche 1 bis 8,
**dadurch gekennzeichnet, dass** die Isolierung (6) Teil einer isolierenden Endscheibe des Statorkörpers (1) ist.

11. Stator, insbesondere nach einem der Ansprüche 1 bis 10,
**dadurch gekennzeichnet, dass** die Arme (4) an ihren freien Enden Zähne (5) aufweisen, die an wenigstens einer ihrer einander zugewandten Schmalseiten (17, 18) eine Vertiefung (19, 20) zur Aufnahme eines Teils der Isolierung (6) aufweisen.

12. Stator nach Anspruch 11,
**dadurch gekennzeichnet, dass** die Vertiefung (19, 20) in eine der Längsseiten (21), vorzugsweise in die dem Ring (3) zugewandte Längsseite des Zahnes (5) mündet.

13. Stator nach einem der Ansprüche 1 bis 12,
**dadurch gekennzeichnet, dass** der Abstand zwischen den Schmalseiten (17, 18) benachbarter Zähne (5) über deren radiale Breite zumindest annähernd konstant ist.

14. Stator nach einem der Ansprüche 6 bis 13,
**dadurch gekennzeichnet, dass** über die Schaltplatine (24) die elektrische Verbindung zwischen dem Stator/Rotor und einer Leistungselektronik hergestellt wird.

15. Verfahren zur Herstellung eines Stators nach einem der Ansprüche 1 bis 14, bei dem ein Wickeldraht (9) um die Arme (4) des Statorkörpers (1) gewickelt wird, **gekennzeichnet durch** folgende Merkmale:
a) Der Wickeldraht (9) wird vom Innenraum des Statorkörpers (1) aus durch einen der ersten Durchlässe (8) und den zugeordneten zweiten Durchlass (15) radial nach außen geführt.
b) Anschließend wird mindestens ein Arm (4) umwickelt.
c) Der Wickeldraht (9) wird anschließend durch den in Umfangsrichtung nächsten zweiten Durchlass (15) und den zugeordneten ersten Durchlass (8) radial nach innen geführt.
d) Der Wickeldraht (9) wird dann zum folgenden ersten Durchlass (8) und dem zugeordneten zweiten Durchlass (15) wieder radial nach außen geführt.
e) Die Verfahrensschritte a bis d werden so lange wiederholt, bis der letzte Arm (4) des Statorkörpers (1) umwickelt und der Wickeldraht (9) durch die zweiten und ersten Durchlässe (15, 8) radial nach innen geführt ist.

16. Verfahren nach Anspruch 15,
**dadurch gekennzeichnet, dass** nach dem Umwickeln des einen Armes (4) der Wickeldraht (9) zum nächsten Arm (4) geführt wird, der dann umwickelt wird, und dass anschließend der Wickeldraht (9) durch die Durchlässe (8, 15) radial nach innen geführt wird.

17. Verfahren nach Anspruch 15,
**dadurch gekennzeichnet, dass** nach dem Umwickeln jedes Arms (4) der Wickeldraht (9) jeweils durch die Durchlässe (8, 15) radial nach innen geführt wird.

18. Verfahren nach einem der Ansprüche 15 bis 17,
**dadurch gekennzeichnet, dass** nach dem Wickelvorgang die Kontaktierung der Wicklungen (12) mittels der Schneid-Klemm-Kontakte (31) vorgenommen wird und je nach Schaltungsvariante nach der Kontaktierung die zwischen den Durchlässen (8, 15) radial innen gebildeten Schlaufen (13) des Wickeldrahtes (9) durchtrennt werden.

19. Elektromotor, vorzugsweise Außenläufermotor, mit einem Stator nach einem der Ansprüche 1 bis 14 und einem drehbaren Rotor.

## Claims

1. A stator for an electric motor with a stator body (1), which has arms (4), which protrude radially from a ring, are surrounded by a coil (12), with at least one electrical insulation (6), which is provided with passages (8), which, in the direction of the ring (3) and the arms (4), are open for the winding wire (9), and which forms, at the inner edge of the stator body (1), a ring (7) protruding axially over the stator body (1) and with receptacles (14) for insulation piercing contacts (31) for the winding wire (9), **characterized in that** the protruding ring (7) is provided over its periphery with the first passages (8) for the winding wire (9), that the electrical insulation (6) has second passages (15) assigned to the first passages (8), and which cross or are connected to the receptacles (14) provided for the insulation piercing contacts (31) and are at a radial distance from the first passages (8).

2. The stator according to claim 1,
**characterized in that** the passages (8, 15) are aligned at least approximately radially.

3. The stator according to claim 1 or 2,
**characterized in that** the insulation (6) is provided with clamping sections (15, 16) for the winding wire (9), which are provided at the second openings (15).

4. The stator according to one of the claims 1 to 3,
**characterized in that** the second openings (15) are formed by depressions in the insulation (6).

5. The stator according to claim 3 or 4,
**characterized in that** the second passages (15) have at least at one, preferably at two opposite side walls at least one protrusion (16).

6. The stator, especially according to one of the claims 1 to 5,
**characterized in that** the insulation (6) has at least one indexing element (23) for a printed circuit board (24).

7. The stator according to claim 6,
**characterized in that** the indexing element (23) is designed as an indexing pin.

8. The stator, especially according to one of the claims 1 to 7,
**characterized in that** the insulation (6) has at least one further indexing element (29) for fixing the position of at least one sensor, preferably a Hall-IC.

9. The statory according to one of the claims 1 to 8,
**characterized in that** the insulation (6) is part of encapsulation of the stator body (1).

10. The stator according to one of the claims 1 to 8,
**characterized in that** the insulation (6) is part of an insulating end disk of the stator body (1).

11. The stator, especially according to one of the claims 1 to 10,
**characterized in that** the arms (4) have, at the free ends thereof, teeth (5), which, at least at their mutually facing narrow sides (17, 18), have a depression (19, 20) for accommodating a part of the insulation (6).

12. The stator according to claim 11,
**characterized in that** the depression (19, 20) leads into one of the longitudinal sides (21), preferably into the longitudinal side of the tooth (5) facing the ring (3).

13. The stator according to one of the claims 1 to 12,
**characterized in that** the distance between the teeth (5) adjacent to the narrow sides (17, 18) is at least approximately constant over the radial width of the teeth (5).

14. The stator according to one of the claims 6 to 13,
**characterized in that** the electrical connection between the stator/rotor and power electronics is set up over the printed circuit board (24).

15. A method for manufacturing a stator according to one of the claims 1 to 14, for which a winding wire (9) is wound around the arms (4) of the stator body (1), **characterized by** the following features:
a) the winding wire (9) is passed from the interior of the stator body (1) through one of the first passages (8) and the associated second passage (15) radially towards the outside,
b) subsequently, the at least one arm (4) is wrapped,
c) subsequently, the winding wire (9) is passed through the second opening (15), which is the next opening in the peripheral direction, and through the associated first passage (8) radially inwards,
d) the winding wire (9) is then passed radially to towards the outside once again to the following first passage (8) and the associated second passage (15),
e) steps a to d are repeated until the last arm (4) of the stator body (1) is wrapped and the winding wire (9) is passed through the second and the first passages (15, 8) radially towards the inside.

16. The method according to claim 15,
**characterized in that**, after the one arm (4) is wrapped, the winding wire (9) is passed to the next arm (4), which is then wrapped and that subsequently the winding wire (9) is passed through the passages (8, 15) radially inwards.

17. The method according to claim 15,
**characterized in that**, after each arm (4) is wrapped, the winding wire (9) is passed radially inwards through the passages (8, 15).

18. The method according to one of the claims 15 to 17,
**characterized in that**, after the winding process, the coils (12) are contacted by means of the insulation piercing contacts (31) and after the contacting, the loops (13) of the winding wire (9), formed radially inwards between the passages (8, 15), are severed according to the circuit variant after the contacting.

19. An electric motor, preferably an external rotor motor with a stator according to one of the claims 1 to 14 and a rotatable rotor.

## Revendications

1. Stator pour un moteur électrique, avec un corps de stator (1) qui comporte des bras (4) débordant en direction radiale d'une bague, entourés chacun par un enroulement (12), avec au moins une isolation électrique (6) qui est dotée de passages (8) ouverts en direction de la bague (3) et des bras (4) pour le fil de bobinage (9) et qui forme sur le bord intérieur du corps de stator (1) une bague (7) saillant en direction axiale par-dessus le corps de stator (1) et avec des logements (14) pour des contacts à serrage-découpage (31) pour le fil de bobinage (9),
**caractérisé en ce que** la bague (7) saillante est dotée sur sa circonférence des premiers passages (8) pour le fil de bobinage (9) et **en ce que** l'isolation électrique (6) comporte des deuxièmes passages (15) associés aux premiers passages (8) qui croisent les logements (14) pour les contacts à serrage-découpage (31) ou se raccordent sur ces derniers et qui sont situés avec un écart radial par rapport aux premiers passages (8).

2. Stator selon la revendication 1,
**caractérisé en ce que** les passages (8, 15) sont orientés au moins approximativement en direction radiale.

3. Stator selon la revendication 1 ou 2,
**caractérisé en ce que** l'isolation (6) est dotée de segments de serrage (15, 16) pour le fil de bobinage (9) qui sont prévus sur les deuxièmes passages (15).

4. Stator selon l'une quelconque des revendications 1 à 3,
**caractérisé en ce que** les deuxièmes passages (15) sont formés par des creux dans l'isolation (6).

5. Stator selon la revendication 3 ou 4,
**caractérisé en ce que** sur au moins une, de préférence sur deux parois latérales opposées, les deuxièmes passages (15) comportent au moins une saillie (16).

6. Stator, notamment selon l'une quelconque des revendications 1 à 5,
**caractérisé en ce que** l'isolation (6) comporte au moins un élément d'indexation (23) pour une carte électronique (24).

7. Stator selon la revendication 6,
**caractérisé en ce que** l'élément d'indexation (23) est conçu en tant que tige d'indexation.

8. Stator, notamment selon l'une quelconque des revendications 1 à 7,
**caractérisé en ce que** l'isolation (6) comporte au moins un élément d'indexation (29) supplémentaire pour fixer en position au moins un capteur, de préférence un CI à effet Hall.

9. Stator selon l'une quelconque des revendications 1 à 8,
**caractérisé en ce que** l'isolation (6) est une partie d'un enrobage par injection du corps de stator (1).

10. Stator selon l'une quelconque des revendications 1 à 8,
**caractérisé en ce que** l'isolation (6) est une partie d'un disque d'extrémité isolant du corps de stator (1).

11. Stator, notamment selon l'une quelconque des revendications 1 à 10,
**caractérisé en ce que** les bras (4) comportent sur leurs extrémités libres des dents (5) qui sur au moins l'un de leurs côtés étroits (17, 18) qui se font face mutuellement comportent un creux (19, 20) destiné à recevoir une partie de l'isolation (6).

12. Stator selon la revendication 11,
**caractérisé en ce que** le creux (19, 20) débouche dans l'un des côtés longitudinaux (21), de préférence dans le côté longitudinal de la dent (5) qui fait face à la bague (3).

13. Stator selon l'une quelconque des revendications 1 à 12,
**caractérisé en ce que** l'écart entre les côtés étroits (17, 18) de dents (5) voisines est au moins approximativement constant sur leur largeur radiale.

14. Stator selon l'une quelconque des revendications 6 à 13,
**caractérisé en ce que** la connexion électrique entre le stator/rotor et une électronique de puissance est établie par l'intermédiaire de la carte électronique (24).

15. Procédé de fabrication d'un stator selon l'une quelconque des revendications 1 à 14, lors duquel on enroule en fil de bobinage (9) autour des bras (4) du corps de stator (1), **caractérisé par** les caractéristiques suivantes :
a) On conduit le fil de bobinage (9) de l'espace intérieur du corps de stator (1) à travers l'un des premiers passages (8) et le deuxième passage (15) associé, en direction radiale vers l'extérieur.
b) On enroule ensuite au moins un bras (4).
c) On conduit ensuite le fil de bobinage (9) à travers le deuxième passage (15) suivant, en direction circonférentielle et le premier passage (8) associé, en direction radiale vers l'intérieur.
d) On conduit ensuite le fil de bobinage (9) vers le prochain premier passage (8) et le deuxième passage (15) associé, de nouveau en direction radiale vers l'extérieur.
e) On répète les étapes de procédé a à d jusqu'à ce que le dernier bras (4) du corps de stator (1) soit enroulé et le fil de bobinage (9) soit conduit à travers les deuxièmes et premiers passages (15, 8), en direction radiale vers l'intérieur.

16. Procédé selon la revendication 15,
**caractérisé en ce qu'**après l'enroulement de l'un des bras (4), on conduit le fil de bobinage (9) vers le bras (4) suivant, que l'on enroule ensuite et **en ce qu'**on conduit ensuite le fil de bobinage (9) à travers les passages (8, 15), en direction radiale vers l'intérieur.

17. Procédé selon la revendication 15,
**caractérisé en ce qu'**après l'enroulement de chaque bras (4), on conduit le fil de bobinage (9) chaque fois à travers les passages (8, 15), en direction radiale vers l'intérieur.

18. Procédé selon l'une quelconque des revendications 15 à 17,
**caractérisé en ce qu'**après l'opération d'enroulement, on procède à la mise en contact des enroulements (12) au moyens des contacts à serrage-découpage (31) et en fonction de la variante de circuit, après la mise en contact, on sectionne les boucles (13) du fil de bobinage (9) formées en direction radiale à l'intérieur, entre les passages (8, 15).

19. Moteur électrique, de préférence moteur à induit extérieur, avec un stator selon l'une quelconque des revendications 1 à 14 et un rotor rotatif.
